(19) Europäisches Patentamt
European Patent Office
Office européen des brevets

(11) **EP 1 323 473 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(51) Int Cl.:
***B01J 41/04*** *(2006.01)*     ***B01J 41/14*** *(2006.01)*
***C08F 20/56*** *(2006.01)*     ***C08F 8/32*** *(2006.01)*

(21) Anmeldenummer: **02026973.4**

(22) Anmeldetag: **04.12.2002**

(54) **Monodisperse Anionenaustauscher**

Monodispersed anion exchanger

Echangeur d'anions monodispersés

(84) Benannte Vertragsstaaten:
**DE FR GB IT**
Benannte Erstreckungsstaaten:
**RO**

(30) Priorität: **17.12.2001 DE 10161979**

(43) Veröffentlichungstag der Anmeldung:
**02.07.2003 Patentblatt 2003/27**

(73) Patentinhaber: **LANXESS Deutschland GmbH**
**51369 Leverkusen (DE)**

(72) Erfinder:
 • **Klipper, Reinhold, Dr.**
 **50933 Köln (DE)**

 • **Halle, Olaf, Dr.**
 **51061 Köln (DE)**
 • **Schmidt, Claudia, Dr.**
 **42799 Leichlingen (DE)**
 • **Podszun, Wolfgang, Dr.**
 **51061 Köln (DE)**
 • **Seidel, Rüdiger, Dr.**
 **51375 Leverkusen (DE)**
 • **Soest, Hans-Karl**
 **51147 Köln (DE)**

(56) Entgegenhaltungen:
**EP-A- 0 046 535**     **EP-A- 0 464 458**
**EP-A- 0 532 894**     **EP-A- 1 078 688**
**DE-A- 10 061 544**

## Beschreibung

Gegenstand der vorliegenden Erfindung ist ein Verfahren zur Herstellung monodisperser schwachbasischer und gegebenenfalls monodisperser starkbasischer Anionenaustauscher vom Poly(meth)acrylamid-Typ, sowie deren Anwendungen.

Monodisperse Anionenaustauscher vom Poly(meth)acrylamid-Typ im Sinne der vorliegenden Erfindung sind Anionenaustauscher die ausgehend von Monomermischungen entweder auf Basis von monovinylaromatischen Verbindungen oder von Acrylverbindungen mit weiteren Acrylverbindungen copolymerisiert, danach mit Aminen von Diamintyp umgesetzt und schließlich mit Alkylhalogeniden oder Arylhalogeniden funktionalisiert werden.

EP-A-0 464 458, EP-A-0 532 894, EP-A-0 046 535 und EP-A-1 078 688 offenbaren ein Verfahren zur Herstellung von Anionenaustauscher vom Poly(meth)acrylamid-Typ und ein Verfahren zur Herstellung von monodispersen Anionenaustauschern.

Aus dem Stand der Technik sind lediglich heterodisperse Anionenaustauscher vom Poly(meth)acrylamid-Typ bekannt, die in der Praxis bei zahlreichen unterschiedlichen Anwendungen eingesetzt werden können.

Ein wichtiges Einsatzgebiet heterodisperser Anionenaustauscher vom Poly(meth)acrylamid-Typ ist die Wasseraufbereitungstechnik, bei der Anionen wie beispielsweise Chlorid, Sulfat oder Nitrat sowie schwache Säuren wie Kieselsäure, Kohlensäure aber auch organische Säuren wie Ameisensäure, Essigsäure, Zitronensäure, Huminsäuren und andere entfernt werden können.

Anwendung finden heutzutage sowohl gelförmige als auch makroporöse heterodisperse Anionenaustauscher vom Poly(meth)acrylamid-Typ bei der Entfärbung von Presssäften aus Rüben und Zuckerrohr. Im Verlauf der komplexen Produktionsverfahren der Zuckergewinnung verfärben sich die Presssäfte aus den Rüben, bevorzugt Zuckerrüben und aus dem Zuckerrohr. Farbstoffe wie beispielsweise Melanoidine und Karamelfarbstoffe werden gebildet. Mit den genannten heterodispersen Anionenaustauschern vom Poly(meth)acrylamid Typ werden die Farbstofflösungen in US-A 4,082,701 entfärbt. Auch die Entsalzung der Rohlösungen von Flüssig- oder Invertzuckersirup erfolgt heutzutage mit heterodispersen Anionenaustauschern vom Poly(meth)acrylamid Typ.

Weitere heutzutage genutzte Anwendungen gelförmiger oder makroporöser heterodisperser Anionenaustauscher vom Poly(meth)acrylamid Typ sind die Entfernung von Säuren oder sauren Komponenten aus Molke und Fruchtsaftdünnsäften.

Ein bekanntes Verfahren zur Herstellung heterodisperser Anionenaustauscher vom Poly(meth)acrylamid-Typ ist die Aminolyse von vernetzten Acrylsäureester Perlpolymerisaten mit Polyaminen gemäß US-A 2 675 359, CZ-A 169 356, DD 99 587 oder US-A 5 414 020.

Die zur Aminolyse eingesetzten vernetzten (Meth)Acrylsäureesterharz-Perlpolymerisate werden im Stand der Technik als gelförmige oder makroporöse Harze hergestellt. Ihre Herstellung erfolgt als Mischpolymerisation nach dem Suspensionspolymerisationsverfahren. Erhalten werden dabei heterodisperse Perlpolymerisate mit einer breiten Kornverteilung im Bereich von ca. 0,2 mm bis ca. 1,2 mm.

Die nach der anschließenden Aminolyse erhaltenen heterodispersen Anionenaustauscher vom Poly(meth)acrylamid-Typ können mit Alkylierungsmitteln quaterniert werden. Die hierbei erfolgende Umsetzung zu stark basischen Gruppen kann im Bereich von 1 bis 100 %, d.h. vollständig erfolgen. Gängige Alkylierungsmittel sind Alkylhalogenide oder Arylhalogenide oder Mischungen von beiden wie beispielsweise Chlormethan gemäß US-A 4 082 701 oder auch Benzylchlorid.

In der US-A 2 675 359 werden gelförmige und makroporöse heterodisperse Perlpolymerisate auf der Basis eines Acrylsäuremethylester-Divinylbenzol-Copolymers mit Diethylentriamin umgesetzt.

In der DD 99 587 wird die Herstellung kornfester schwach basischer heterodisperser Anionenaustauscher auf der Basis von Polyacrylsäureestern beschrieben. Die Kornfestigkeit wird dadurch erreicht, dass nach der Umsetzung des Copolymerisates mit dem Polyamin das Harz mit einem mit Wasser mischbaren Lösungsmittel, das das Harz schlechter als Wasser quellen lässt, behandelt wird. Als geeignete Lösungsmittel werden z.B. Methanol, Ethanol, Aceton bzw. Mischungen daraus eingesetzt. Man erhält 99 % der Perlen ohne Risse und Sprünge.

Unterbleibt die Behandlung mit beispielsweise Methanol so haben 35 % der Kugeln Risse und Sprünge.

Die heterodispersen Anionenaustauscher vom Poly(meth)acrylamid-Typ zeigen in Abhängigkeit von der Beladungsform des Harzes, d.h. je nach Art des Gegenions zum Stickstoff, unterschiedliche Harzvolumina. Beim Übergang von der Chloridform in die freie Basenform quillt das Harz deutlich auf. Umgekehrt schrumpft es beim Übergang von der freien Basen- in die Chloridform. Beim großtechnischen Einsatz dieser heterodispersen Anionenaustauscher vom Poly(meth)acrylamid-Typ ist also jede Beladung und Regeneration mit einem Schrumpfen bzw. Quellen verbunden. Im Verlauf eines langfristigen Einsatzes werden aber diese heterodispersen Anionenaustauscher mehrere hundertmal regeneriert. Die dabei auftretenden Schrumpf- und Quellvorgänge beanspruchen die Perlen in ihrer Stabilität so stark, dass ein Teil der Perlen Risse erhält, um schließlich sogar zu zerspringen. Es entstehen Bruchstücke, die zu Verstopfungen in den Anwendungsapparaten, den Säulen führen, den Durchfluss behindern was wiederum zu einem erhöhten Druckverlust führt. Ferner verunreinigen die Bruchstücke das zu behandelnde Medium, bevorzugt Wasser und mindern so die Qualität des Mediums bzw. des Wassers.

Der Durchfluss des Wassers durch eine mit Perlen gefüllte Säule wird aber nicht nur durch Harzbruchstücke sondern auch durch feine Perlpolymerisate behindert. Es kommt zu einem Anstieg des Druckverlustes. Bedingt durch die Kornverteilung enthält aber ein heterodisperser Anionenaustauscher vom Poly(meth)acrylamid-Typ Perlen unterschiedlichen Durchmessers. Die Anwesenheit feiner Perlen erhöht somit zusätzlich den Druckverlust.

Seidl et al, Chemicky prumysl, roc. 29 / 54 (1979) cis 9, 470 untersuchten die Aminolysereaktion von vernetzten Acrylsäureesterharzen und fanden, dass neben der Acrylamideinheit auch freie Acrylsäureeinheiten entstehen. Alle Acrylamidharze zeigen freie Acrylsäureeinheiten.

Nach beendeter Beladung heterodisperser Anionenaustauscher vom Poly(meth)acrylamid-Typ mit Anionen wird deshalb das Harz mit verdünnter Natronlauge regeneriert, um für eine neue Beladung bereit zu sein. Es werden Natronlauge-Reste mit Wasser aus dem Harz gewaschen. Darüber hinaus wird das Carboxylation, das durch Behandlung der Carbonsäuregruppe mit Natronlauge entstanden ist, durch die Wasserwäsche hydrolisiert. Es wird während der Produktion der Harze eine niedrige Leitfähigkeit des vom Harz abfließenden Wassers (Waschwassers) angestrebt, da ansonsten ein verunreinigtes Wasser vorliegt. Ziel ist das Erreichen niedriger Leitfähigkeiten mit kleinen Waschwassermengen, da dies als Anzeichen für das Vorliegen kleiner Mengen schwach saurer Gruppen gewertet werden kann.

Ausgehend vom Stand der Technik bestand die Aufgabe der vorliegenden Erfindung darin, sowohl schwachbasische als auch starkbasische monodisperse Anionenaustauscher vom Poly(meth)acrylamid-Typ mit hoher mechanischer als auch osmotischer Stabilität der Perlen, niedrigem Druckverlust des Perlbettes in der Anwendung sowie niedrigem Waschwasserbedarf und hoher Reinheit des monodispersen Anionenaustauschers selber bereitzustellen.

Gegenstand der vorliegenden Erfindung und Lösung dieser Aufgabe ist deshalb ein Verfahren zur Herstellung monodisperser Anionenaustauscher vom Poly(meth)acrylamid-Typ dadurch gekennzeichnet, dass man

a) in einer ersten Stufe eine Monomermischung enthaltend eine oder mehrere verschiedene Acrylverbindungen und einen oder mehrere Vernetzer oder eine oder mehrere monovinylaromatische Verbindungen und einen oder mehrere Vernetzer in eine mit der Monomermischung im wesentlichen nicht mischbaren Flüssigkeit eindüst oder einsprüht, dann verkapselt und polymerisiert oder nach der Verkapselung mit einem Feed aus Acrylverbindungen und Vernetzern nach einem Saat-Zulauf-Verfahren umsetzt (füttert) und polymerisiert und

b) das aus der ersten Stufe erhaltene Produkt in flüssige Amine vom Diamintyp einträgt, die Suspension auf Temperaturen größer 100°C erhitzt und gegebenenfalls unter Abdestillation entstehender Komponenten mehrere Stunden lang rührt, sowie das aminierte Perlpolymerisat aminfrei wäscht.

Bevorzugt besteht der Feed in Schritt a) aus denselben Acrylverbindungen und Vernetzer, die bereits als Monomermischung eingesetzt werden.

Alternativ kann für den Fall, dass man von Acrylverbindungen ausgeht auf die Zugabe von einem Feed aus zusätzlichen, gegebenenfalls denselben Acrylverbindungen, verzichtet werden. In diesem Fall betrifft die vorliegende Erfindung ein Verfahren zur Herstellung monodisperser schwachbasischer Anionenaustauscher vom Poly(meth)acrylamid-Typ, dadurch gekennzeichnet, dass man

a) in einer ersten Stufe eine Mischung aus einen oder mehreren verschiedenen Acrylverbindungen und einen oder mehrerer verschiedener Vernetzer in eine mit der Monomermischung im wesentlichen nicht mischbaren Flüssigkeit eindüst oder einsprüht, dann verkapselt und polymerisiert und

b) das aus er ersten Stufe erhaltene Produkt in flüssige Amine vom Diamintyp einträgt, die Suspension auf Temperaturen größer 100°C erhitzt und gegebenenfalls unter Abdestillation entstehender Komponenten mehrere Stunden lang rührt sowie das erhaltene aminierte Perlpolymerisat aminfrei wäscht. Gegebenenfalls schließt sich zur Herstellung starkbasischer monodisperser Anionenaustauscher vom Poly(meth)acrylamid-Typ eine dritte Stufe an, worin

c) das gemäß der zweiten Stufe hergestellte aminierte Perlpolymerisat mit Alkyl- oder Arylhalalogeniden teilweise oder vollständig zu den entsprechenden starkbasischen monodispersen Anionenaustauschern mit quartären Aminogruppen vom Poly(meth)acrylamid-Typ umgesetzt wird.

Im Verfahrensschritt a) kann ein dynamischer Seed-Feed-Prozeß wie in US-A 50 68 255 oder eine statische Variante wie in US-A 5 834 524 beschrieben, durchgeführt werden.

Bevorzugt wird in der zweiten Stufe Methanol abdestilliert. In einer weiteren bevorzugten Variante wird in der ersten Stufe als monovinylaromatische Komponente a) eine Styrol-Divinylbenzol Monomermischung vorgelegt, die dann mit einem Feed aus Acrylverbindungen und Polyvinylverbindungen in einem Saat-Zulauf-Verfahren gefüttert wird.

Unter Vernetzer werden erfindungsgemäß Polyvinylalkyl-Verbindungen und/oder Polyvinylaromatische Verbindungen und/oder Dien-Verbindungen verstanden.

Überraschenderweise kann beim erfindungsgemäßen Verfahren auf eine aufwendige und kostspielige Behandlung des monodispersen Perlpolymerisats nach der Aminierung mit beispielsweise Methanol verzichtet werden und man erhält schwachbasische oder gegebenenfalls starkbasische monodisperse Anionenaustauscher vom Poly(meth)acrylamid-Typ mit hervorragenden osmotischen und mechanischen Stabilitäten, niedrigen Leitfähigkeiten des vom Harz abfließenden Wassers, verringertem Druckverlust bei der Anwendung sowie deutlich verringertem Waschwasserbedarf.

Als monodispers werden in der vorliegenden Anmeldung solche Stoffe bezeichnet, bei denen mindestens 90 Volumen- oder Massen-% der Teilchen einen Durchmesser besitzen, der in dem Intervall mit der Breite von $\pm$ 10 % des häufigsten Durchmessers um den häufigsten Durchmesser herum liegt.

Zum Beispiel bei einem Stoff mit häufigstem Durchmesser von 0,5 mm liegen mindestens 90 Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,63 mm und 0,77 mm.

Prinzipiell können im Verfahrensschritt a) zwei verschiedene Methoden eingesetzt werden. Man unterscheidet dabei die Direktverdüsung und das Saat-Zulauf-Verfahren.

Bei Anwendung der Direktverdüsung im Verfahrensschritt a) wird eine Monomermischung im wesentlichen enthaltend eine oder mehrere verschiedene Acrylverbindungen, bevorzugt (Meth)acrylatester, besonders bevorzugt Methylacrylat oder (Meth)acrylnitril sowie einen oder mehrere Vernetzer, beispielsweise Divinylbenzol oder Diethylenglycoldivinylether in eine mit der Monomermischung im wesentlichen nicht mischbaren Flüssigkeit unter Ausbildung monodisperser Tropfen eingedüst (gejettet), dann verkapselt und die daraus erhaltenen Monomertropfen polymerisiert.

Bei Anwendung des Saat-Zulauf-Verfahrens im Verfahrenschritt a) sind wiederum zwei Varianten möglich.

Entweder geht man von einem monodispersen Styrol-Divinylbenzol-Perlpolymerisat enthaltend beispielsweise

98,5 - 99,98 Gew.-% Styrol
0,01 - 2 Gew.-% Divinylbenzol und
0,01 - 0,05 Gew.-% Ethylstyrol

aus und füttert dieses mit dem bereits oben beschriebenen Feed aus Acrylverbindungen sowie einem oder mehreren Vernetzern, wobei man nach der Polymerisation das monodisperse perlförmige vernetzte Acryl-enthaltende Perlpolymerisat erhält. Für diese Alternative dienen monovinylaromatische Verbindungen, bevorzugt monoethylenisch ungesättigte Verbindungen wie beispielsweise Styrol, Ethylstyrol oder mit Halogen oder weiteren Alkylresten, bevorzugt Chlor oder $C_1$-$C_4$-Alkyl, substituierten Styrolen, als Edukte.

Oder man nimmt das gemäß dem oben beschriebenen Direktverdüsungsverfahren erhaltene Perlpolymerisat und füttert dieses mit einem Feed aus Acrylverbindungen, bevorzugt denselben Acrylverbindung, sowie einem oder mehreren Vernetzern zum gewünschten Perlpolymerisat mit anschließender Polymerisation.

In allen Fällen empfiehlt es sich, die monodispersen perlförmigen vernetzten Acrylpolymerisate möglichst wasserfrei zu erhalten, damit man diese im sich daran anschließenden erfindungsgemäßen Verfahrensschritt b) einsetzen kann.

Die im erfindungsgemäßen Verfahren in der ersten Stufe a) einzusetzende Monomermischung enthält 1 bis 50 Gew.-%, bevorzugt 1 bis 25 Gew.-%, besonders bevorzugt 1,5 bis 12 Gew.-% insbesondere bevorzugt 2 bis 8 Gew.-% Vernetzer und 50 bis 99 Gew.-%, bevorzugt 75 bis 99 Gew.-% besonders bevorzugt 88 bis 98,5 Gew.-%, insbesondere bevorzugt 92 bis 98 Gew.-% Acrylverbindungen, bevorzugt (Meth)acrylester oder (Meth)acrylnitril. Als besonders bevorzugte Edukte werden Diethylenglycoldivinylether als Vernetzer und Methylacrylat eingesetzt.

Die gefütterten Perlen nach dem Saat-Zulauf-Verfahren sind dabei deutlich größer als die feinen Saatperlen, wie man sie nach dem Direktverdüsungsverfahren erhält.

Techniken zur Herstellung monodisperser, vernetzter, Perlpolymerisate nach dem Saat-Zulauf-Verfahren oder dem Direktverdüsungsverfahren (Jetten) werden beispielsweise in US-A 4 444 961, US-A 4 427 794, US-A 4 419 245, US-A 5 231 115 oder US-A 4 564 644 beschrieben.

In der US-A 4 427 794 wird das monodisperse, vernetzte vinylaromatische Perlpolymerisat in der gewünschten Größe dadurch hergestellt, dass die Monomermischung in eine mit der Monomermischung im wesentlichen nicht mischbaren Flüssigkeit eingedüst (eingesprüht), dann verkapselt und die erhaltenen Monomertropfen polymerisiert werden. Diese Verfahrensweise wird ebenfalls in der vorliegenden Erfindung angewandt.

Bevorzugte (Meth)acrylester oder (Meth)acrylnitrile im Sinne der vorliegenden Erfindung sind monoethylenisch ungesättigte Verbindungen wie beispielsweise Acrylsäurealkylester oder Methacrylsäurealkylester, besonders bevorzugt (Meth)acrylsäuremethylester, (Meth)acrylsäureethylester oder Acrylnitril.

Insbesondere bevorzugter (Meth)acrylester im Sinne der vorliegenden Erfindung ist der Acrylsäuremethylester.

Bevorzugte Vernetzer die im Sinne der vorliegenden Erfindung im Verfahrensschritt a) eingesetzt werden sind multifunktionelle ethylenisch ungesättigte Verbindungen wie beispielsweise Divinylbenzol, Divinyltoluol, Trivinylbenzol, Divinylnaphtalin, Trivinylnaphtalin, 1,7-Octadien, 1,5-Hexadien, Diethylenglykoldivinylether, Ethylenglycoldimethacrylat, Trimethylolpropantrimethacrylat oder Allylmethacrylat.

Die Art der Vernetzer wird im Hinblick auf die spätere Verwendung des kugelförmigen Polymerisats ausgewählt. Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend.

Im Falle dass das Edukt aus Styrol-Divinylbenzol-Perlpolymerisaten nach dem Saat-Zulauf-Verfahren hergestellt wird, enthält das im erfindungsgemäßen Verfahren im Schritt b) einzusetzende monodisperse perlförmig vernetzte Acrylpolymerisat noch 0,001 bis 8 Gew.-%, bevorzugt 0,0015 bis 5 Gew.-% Divinylbenzol.

In einer bevorzugten Ausführungsform des erfindungsgemäßen Verfahrens kommen im Verfahrensschritt b) mikroverkapselte Acrylpolymerisate oder mikroverkapselte Acryl-enthaltende Perlpolymerisate zum Einsatz.

Für die Herstellung mikroverkapselter Acrylpolymerisate oder der mikroverkapselten Acryl-enthaltende Perlpolymerisate für den Verfahrensschritt b) kommen die für den Einsatz als Komplexkoazervate bekannten Materialien in Frage, insbesondere Polyester, natürliche oder synthetische Polyamide, Polyurethane, Polyharnstoffe.

Als natürliches Polyamid ist beispielsweise Gelatine besonders gut geeignet. Diese kommt insbesondere als Koazervat oder Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid oder Methacrylamid. Besonders bevorzugt werden Acrylsäure oder Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der US-A 4 427 794 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (beispielsweise ein Isocyanat oder ein Säurechlorid) mit einer zweiten, in der wässrigen Phase gelösten Reaktivkomponente (beispielsweise einem Amin), zur Reaktion gebracht wird.

Die gegebenenfalls mikroverkapselten Monomertröpfchen enthalten gegebenenfalls einen Initiator oder Mischungen von Initiatoren zur Auslösung der Polymerisation. Für das erfindungsgemäße Verfahren geeignete Initiatoren sind beispielsweise Peroxyverbindungen wie Dibenzoylperoxid, Dilauroylperoxid, Bis (p-chlorbenzoyl)-peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azobis(isobutyronitril) oder 2,2'-Azobis(2-methylisobutyronitril).

Die Initiatoren werden im Allgemeinen in Mengen von 0,05 bis 2,5 Gew.-%, vorzugsweise 0,1 bis 1,5 Gew.-%, bezogen auf die Monomeren-Mischung, eingesetzt.

Als weitere Zusätze in den gegebenenfalls mikroverkapselten Monomertröpfchen können gegebenenfalls Porogene verwendet werden, um im kugelförmigen Polymerisat eine makroporöse Struktur zu erzeugen. Hierfür sind organische Lösungsmittel geeignet, die das entstandene Polymerisat schlecht lösen bzw. quellen. Beispielhaft seien Hexan, Octan, Isooctan, Isododecan, Methylethylketon, Butanol oder Octanol oder deren Isomeren genannt.

Als Porogene sind also vor allem organische Substanzen geeignet, die sich im Monomeren lösen, das Polymerisat aber schlecht lösen bzw. quellen (Fällmittel für Polymere) beispielsweise aliphatische Kohlenwasserstoffe, wie sie im Deutschen Patent 1 045 102 oder im Deutschen Patent 1 113 570 beschrieben werden.

In US-A 4 382 124 werden als Porogen beispielsweise Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Der für die Synthese monodisperser makroporöser Anionenaustauscher auf Basis von Poly(meth)acrylamid eingesetzte Anteil an Porogen liegt bei 1 bis 50 Gew.-%, bevorzugt 3 bis 30 Gew.-%, besonders bevorzugt 4 bis 20 Gew.-%, bezogen auf das Monomer.

Die Begriffe mikroporös oder gelförmig bzw. makroporös sind in der Fachliteratur beispielsweise in Seidl, Malinsky, Dusek, Heitz, adv. Polymer Sci., Vol. 5 Seiten 113 bis 213 (1967) eingehend beschrieben worden.

Bevorzugte Perlpolymerisate im Sinne der vorliegenden Erfindung, weisen eine monodisperse gelförmige Struktur auf.

Das gegebenenfalls mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Die mittlere Teilchengröße der gegebenenfalls verkapselten Monomertröpfchen beträgt 10 - 1000 μm, vorzugsweise 100 - 1000 μm. Das erfindungsgemäße Verfahren ist auch zur Herstellung monodisperser kugelförmiger Polymerisate gut geeignet.

Im Verfahrensschritt a) kann die bevorzugt wässrige Phase gegebenenfalls einen gelösten Polymerisationsinhibitor enthalten. Als Inhibitoren im Sinne der vorliegenden Erfindung kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid oder Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol oder Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 bis 1000 ppm (bezogen auf die wässrige Phase), vorzugsweise 10 bis 500 ppm, besonders bevorzugt 10 bis 250 ppm.

Die Polymerisation der gegebenenfalls mikroverkapselten Monomertröpfchen zum kugelförmigen, monodispersen Acrylpolymerisat im Verfahrensschritt a) erfolgt, wie bereits oben erwähnt, gegebenenfalls in Anwesenheit eines oder mehrerer Schutzkolloide in der wässrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Besonders gut geeignet ist Gelatine. Die Einsatzmenge der Schutzkolloide beträgt im Allgemeinen 0,05 bis 1 Gew.-% bezogen auf die wässrige Phase, vorzugsweise 0,05 bis 0,5 Gew.-%.

Die Polymerisation zum monodispersen vernetzten Acrylpolymerisat als Edukt für den Verfahrensschritt b) kann gegebenenfalls auch in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 13 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borats in der wässrigen Phase beträgt 0,5 bis 500 mmol/l, vorzugsweise 2,5 bis 100 mmol/l.

Die Rührgeschwindigkeit bei der Polymerisation zum monodisperen vernetzten Acrylpolymerisat ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt 1 : 0,75 bis 1 : 20, vorzugsweise 1 : 1 bis 1 : 6.

Die Polymerisationstemperatur richtet sich nach der Zerfallstemperatur des eingesetzten Initiators. Sie liegt im Allgemeinen zwischen 50 bis 180°C, vorzugsweise zwischen 55 und 130°C. Die Polymerisation dauert 0,5 h bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Polymerisat mit üblichen Methoden, beispielsweise durch Filtrieren oder Dekantieren, isoliert und gegebenenfalls gewaschen.

Das im Verfahrensschritt b) zur Aminierung einzusetzende monodisperse Acrylpolymerisat kann wie bereits oben beschrieben in mehreren Einzelschritten hergestellt werden. Saatgutpolymerisat auf der Basis von Styrol-Divinylbenzol - hergestellt nach US 4 427 794- wird beispielsweise mit einem Gemisch von Methylacrylat, Diethylenglykoldivinylether und Dibenzoylperoxid gefüttert, polymerisiert, gewaschen und getrocknet - Herstellung von Copolymerisat I.

Das getrocknete Copolymerisat I wird mit weiterer Monomermischung Methylacrylat, Diethylenglykoldivinylether und Dibenzoylperoxid gefüttert, polymerisiert, gewaschen und getrocknet - Herstellung von Copolymerisat II.

Copolymerisat II wird dann erfindungsgemäß im Verfahrensschritt b) aminiert und gegebenenfalls in einem Verfahrensschritt c) quaterniert.

Im Verfahrensschritt b) erfolgt die Umsetzung des monodispersen vernetzten Acrylpolymerisats aus Verfahrensschritt a) mit Aminen, bevorzugt in Abwesenheit von Wasser. In diesem Fall sind die Amine sowohl Reaktant als auch Rührmedium. Gegebenenfalls können aber auch als Rührmedium für die Aminolyse inerte Flüssigkeiten wie Alkane, beispielsweise Alkane die im Bereich von 120° bis 250°C flüssig sind, eingesetzt werden.

Als Amine im Sinne der vorliegenden Erfindung kommen Verbindungen mit mindestens zwei Aminogruppen im Molekül in Frage, beispielsweise 1-Amin-3-dimethylaminopropan, Triethylentetramin, Diethylentriamin, Tetraethylenpentamin, Pentaethylenhexamin in Frage.

Die Amine werden im Überschuss, bezogen auf die zu aminolysierenden Gruppen, eingesetzt; vorzugsweise in Mengen von 1,1-8, insbesondere 2 bis 6 mol pro mol Ester- bzw. Nitrilgruppen.

Gemäß dem erfindungsgemäßen Verfahren wird die Temperatur der Suspension im Verfahrensschritt b) auf über 100°C, bevorzugt 120°C bis 250°C, besonders bevorzugt 160°C bis 210°C, insbesondere bevorzugt 170°C bis 200°C, erwärmt.

Das Rühren der Suspension im Verfahrensschritt b) erfolgt erfindungsgemäß über mehrere Stunden, bevorzugt 10 bis 30 Stunden, besonders bevorzugt 16 bis 25 Stunden.

Das gemäß dem erfinderischen Verfahren im Verfahrensschritt b) erzeugte aminierte Perlpolymerisat wird aminfrei gewaschen, bevorzugt bis der Amingehalt unter 0,01 Gew.-% liegt.

Das gemäß dem erfindungsgemäßen Verfahren erhältliche aminierte Perlpolymerisat wird gegebenenfalls in einem zusätzlichen Verfahrensschritt teilweise oder vollständig zu stark basischen monodispersen Anionenaustauschen mit quartären Aminogruppen vom Poly(methacryl)amid-Typ alkyliert.

Teilweise bzw. vollständig im Sinne der vorliegenden Erfindung bedeuten, dass bei der Aminierung ca. 10-98 % der basischen Gruppen, vorzugsweise 35 - 98 % der basischen Gruppen als quartäre Aminogruppen vorliegen.

Als Alkylierungsmittel im Sinne der vorliegenden Erfindung für den Verfahrensschritt c) werden vorzugsweise Chlormethan oder Benzylchlorid oder ein Gemisch aus Chlormethan und Benzylchlorid eingesetzt.

Die Alkylierungsmittel werden im Allgemeinen in Mengen von 10 bis 100 mol-%, bezogen auf die Menge schwach basischer Gruppen eingesetzt, wobei diese einer wässrigen Suspension des aminierten Perlpolymerisates aus Verfahrensschritt b) zugegeben werden.

Gegenstand der vorliegenden Erfindung sind aber auch die schwachbasischen monodispersen Anionenaustauscher vom Poly(meth)acrylamid-Typ selber erhältlich durch

a) Eindüsen oder Einsprühen einer Monomermischung enthaltend eine oder mehrere verschiedene Acrylverbindungen und einen oder mehrere Vernetzer oder eine oder mehrere monovinylaromatische Verbindungen und einer oder mehrere Vernetzer in eine mit der Monomermischung im wesentlichen nicht mischbaren Flüssigkeit, Verkapseln und Polymerisieren derselben und Umsetzen der Monomermischung nach der Verkapselung mit einem Feed aus Acrylverbindungen und Vernetzer nach einem Saat-Zulauf-Verfahren und

b) Eintragen des aus der ersten Stufe erhaltenen Produkts in flüssige Amine vom Diamintyp, Erhitzen der Suspension auf Temperaturen größer 100°C und gegebenenfalls Abdestillieren entsprechender Komponenten mehrere Stunden lang unter Rühren, sowie aminfrei Waschen des aminierten Perlpolymerisats.

Für den Fall, dass die Monomermischung aus Acrylverbindungen besteht werden im Feed bevorzugt dieselben Acrylverbindungen eingesetzt.

Für den Fall, dass das Verfahren von einer Monomermischung allein aus einer oder mehreren Acrylverbindungen ausgeht und auf die Zugabe eines Feed in Schritt a) verzichtet wird, betrifft die vorliegende Erfindung schwachbasische monodisperse Anionenaustauscher vom Poly(meth)acrylamid-Typ erhältlich durch

a) Eindüsen oder Einsprühen, einer Monomermischung enthaltend eine oder mehrere verschiedene Acrylverbindungen und einen oder mehrere Vernetzer in eine mit der Monomermischung im wesentlichen nicht mischbaren Flüssigkeit mit anschließender Verkapselung und Polymerisation und

b) Eintragen des aus der ersten Stufe erhaltenen Produkts in flüssige Amine vom Diamintyp, Erhitzen der Suspension auf Temperaturen größer 100°C und Rühren über mehrere Stunden lang, sowie Waschen des aminierten Perlpolymerisats bis dieses aminfrei vorliegt.

Gegenstand der vorliegenden Erfindung sind aber auch die starkbasischen monodispersen Anionenaustauscher vom Poly(meth)acrylamid-Typ erhältlich durch Umsetzen des aus Verfahrensschritt b) erhaltenen aminierten Perlpolymerisats mit Alkyloder Arylhalogeniden teilweise oder vollständig zu stark basischen monodispersen Anionenaustauschern mit quatären Aminogruppen vom Poly(meth)acrylamid-Typ.

Aufgrund der besonderen osmotischen und mechanischen Stabilität und der hohen Reinheit sowohl der schwachbasischen als auch starkbasischen monodispersen Anionenaustauscher vom Poly(meth)acrylamid-Typ sind diese für zahlreiche Anwendungen geeignet.

Die vorliegende Erfindung betrifft deshalb auch die Verwendung der erfindungsgemäßen monodispersen schwachbasichen oder starkbasischen Anionenautauscher vom Poly(meth)acrylamid-Typ

- zur Entfernung von Anionen aus wässrigen oder organischen Lösungen oder deren Dämpfen,

- zur Entfernung von Anionen aus Kondensaten,

- zur Entfernung von Farbpartikeln aus wässrigen oder organischen Lösungen,

- zur Entfärbung und Entsalzung von Glucoselösungen, Molken, Gelatinedünnbrühen, Fruchtsäften, Fruchtmosten oder Zuckern, bevorzugt von Mono- oder Disacchariden, insbesondere Fructoselösungen, Rohrzucker, Rübenzuckerlösung, beispielsweise in der Zuckerindustrie, Molkereien, Stärke- und in der Pharmaindustrie,

- zur Entfernung von organischen Komponenten aus wässrigen Lösungen, beispielsweise von Huminsäuren aus Oberflächenwasser.

Weiterhin können die erfindungsgemäßen schwachbasischen oder starkbasischen Anionenaustauscher vom Poly(meth)acrylamid-Typ eingesetzt werden zur Reinigung und Aufarbeitung von Wässern in der chemischen Industrie und Elektronikindustrie, insbesondere zur Herstellung von Reinstwasser.

Weiterhin können die erfindungsgemäßen schwachbasischen oder starkbasischen monodispersen Anionenaustauscher vom Poly(meth)acrylamid-Typ in Kombination mit gelförmigen und/oder makroporösen Kationenaustauschern zur Vollentsalzung wässriger Lösungen und/oder Kondensaten, insbesondere in der Zuckerindustrie, eingesetzt werden.

Die vorliegende Erfindung betrifft deshalb auch

- Verfahren zur Entfernung von Anionen, bevorzugt Anionen starken Säuren, wie Chlorid, Sulfat, Nitrat aus wässrigen oder organischen Lösungen und deren Dämpfen,

- Verfahren zur Entfernung von Anionen, bevorzugt von Anionen starker Säuren wie Chlorid, Sulfat, Nitrat aus Kondensaten,

- Verfahren zur Entfernung von Farbpartikeln aus wässrigen oder organischen Lösungen,

- Verfahren zur Entfärbung und Entsalzung von Glucoselösungen, Molken, Gelatinedünnbrühen, Fruchtsäften, Fruchtmosten oder Zuckern, bevorzugt von Mono- oder Disacchariden, insbesondere Rohrzucker, Fructose- oder Rübenzuckerlösungen, beispielsweise in der Zucker-, Stärke- oder Pharmaindustrie oder in Molkereien,

- Verfahren zur Entfernung von organischen Komponenten aus wässrigen Lösungen, beispielsweise von Huminsäuren aus Oberflächenwasser unter Einsatz der erfindungsgemäßen schwachbasischen oder starkbasischen monodispersen Anionenaustauscher vom Poly(meth)acrylamid-Typ.

Die erfindungsgemäßen monodispersen schwachbasischen oder starkbasischen monodispersen Anionenaustauscher vom Poly(meth)acrylamid-Typ können darüber hinaus fein gemahlen in Pulverform als stark basische Anionenaustauscher allein oder in Mischungen mit Kationenaustauschern zur Filtration und Entsalzung von Wässern, beispielsweise Kondensaten, eingesetzt werden. Ihre Vorzüge liegen in der hohen Reaktionsgeschwindigkeit und in der ausgezeichneten Filtrationswirkung für suspendierte Partikel.

## Beispiel 1

Herstellung eines Copolymerisates I

In einem 4 1 Glasreaktor wird eine wässrige Lösung aus 3,6 g Borsäure und 1,0 g Natriumhydroxid in 1218 g entionisiertem Wasser vorgelegt. Hierzu werden 264,7 g monodisperses mikroverkapseltes Saatpolymerisat enthaltend 99,63 Gew.% Styrol, 0,3 Gew.% Divinylbenzol und 0,07 Gew.% Ethylstyrol gegeben. Divinylbenzol wurde als handelsübliches Isomerengemisch aus 80,6 Gew.% Divinylbenzol und 19,4 Gew.% Ethylstyrol eingesetzt. Das Saatpolymerisat wurde nach US 4 427 794 hergestellt und die Kapselwand des Saatpolymerisats besteht aus einem mit Formaldehyd gehärteten Komplexkoazervat aus Gelatine und einem Acrylamid/Acrylsäure-Copolymerisat. Die mittlere Teilchengröße des Saatpolymerisats beträgt 220 $\mu$m und der $\varnothing$(90)/$\varnothing$(10)-Wert beträgt 1,05. Das Gemisch wird mit einer Rührerdrehzahl von 220 U/min gerührt. Innerhalb von 30 Minuten wird ein Gemisch aus 605,1 g Methylacrylat, 30,2 g Diethylenglykoldivinylether und 3,39 g Dibenzoylperoxid (75 gew.%-ig) zugegeben. Das Polymerisationsgemisch wird 2 Stunden bei Raumtemperatur gerührt, wobei der Gasraum mit Stickstoff gespült wird. Danach wird eine Lösung von 2,7 g Methylhydroxyethylcellulose in 132,3 g entionisiertem Wasser zugesetzt. Der Ansatz wird innerhalb von 75 Minuten auf 63°C aufgeheizt und 5 Stunden bei dieser Temperatur belassen. Anschließend wird innerhalb von 60 Minuten auf 95°C erwärmt und weitere 120 Minuten bei dieser Temperatur gerührt. Der Ansatz wird nach dem Abkühlen über ein 40 $\mu$m-Sieb mit entionisiertem Wasser gewaschen und dann 18 Stunden bei 80°C im Trockenschrank getrocknet. Man erhält 833 g eines kugelförmigen Copolymerisats I mit einer mittleren Teilchengröße von 330 μm und einem ∅(90)/∅(10)-Wert von 1,21, was bedeutet, dass 96 Volumen % in einer Größenordnung zwischen 297 μm und 363 μm liegen.

Herstellung eines Copolymerisates II als Edukt für das erfindungsgemäße Verfahren

In einem 4 1 Glasreaktor wird eine wässrige Lösung aus 1,08 g Borsäure und 0,34 g Natriumhydroxid in 917 g entionisiertem Wasser vorgelegt. Hierzu werden 288,7 g Copolymerisat I aus Beispiel 1 a) gegeben. Das Gemisch wird mit einer Rührerdrehzahl von 220 U/Minute gerührt (U=Umdrehungen). Innerhalb von 30 Minuten wird ein Gemisch aus 439,6 g Methylacrylat, 21,9 g Diethylenglykoldivinylether und 2,46 g Dibenzoylperoxid (75 gew.%-ig) zugegeben. Das Gemisch wird 2 Stunden bei Raumtemperatur gerührt, wobei der Gasraum mit Stickstoff gespült wird. Danach wird eine Lösung von 1,83 g Methylhydroxyethylcellulose in 89,8 g entionisiertem Wasser zugesetzt. Der Ansatz wird innerhalb von 75 Minuten auf 60°C aufgeheizt und 5 Stunden bei dieser Temperatur belassen. Anschließend wird innerhalb von 60 Minuten auf 95°C erwärmt und weitere 120 Minuten bei dieser Temperatur gerührt. Der Ansatz wird nach dem Abkühlen über ein 40 μm-Sieb mit entionisiertem Wasser gewaschen und dann 18 Stunden bei 80°C im Trockenschrank getrocknet. Man erhält 667 g eines kugelförmigen Copolymerisats II mit einer mittleren Teilchengröße von 450 μm und einem ∅(90)/∅(10)-Wert von 1,25, was bedeutet, dass 95 Volumen % in einer Größenordnung zwischen 405 μm und 495 μm liegen.

Umsetzung des monodispersen, vernetzten, Acrylsäuremethylester Copolymerisates I mit 1-Amin-3-dimethylaminopropan

In einem 3 Liter Rührautoklav werden 280 Gramm des Perlpolymerisates aus 1 a) bei Raumtemperatur vorgelegt. Bei Raumtemperatur werden 1600 ml 1-Amin-3-dimethylaminopropan zudosiert. Die Suspension wird in 2,5 Stunden auf 185°C erhitzt und bei dieser Temperatur weitere 24 Stunden gerührt. Nach dem Abkühlen auf Raumtemperatur wird das Reaktionsgemisch mit Isopropanol aus dem Autoklav in eine Säule gespült und mit weiteren 4 Bettvolumen Isopropanol eluiert. Anschließend wird das Harz mit 8 Bettvolumen vollentsalztem Wasser eluiert.
Ausbeute : 1570 ml

Elementaranalytische Zusammensetzung:

63,4 Gew. % Kohlenstoff
10,0 Gew. % Wasserstoff
15,75 Gew. % Stickstoff
11,45 Gew. % Sauerstoff

Stabilität des Harzes

Originalzustand : 99 % perfekte Perlen
Nach dem Walztest : 96 % perfekte Perlen
Nach dem Quellungsstabilitätstest : 98 % perfekte Perlen

Nutzbare Kapazität des Harzes : 0,94 mol /l
Waschwasser bis 10μS / cm : 7,9 Bettvolumen
Waschwasser bis 2μS / cm : 15,9 Bettvolumen

HCl - Zahl des Harzes : 1,736 mol /l
NaOH - Zahl des Harzes : 0,032 mol / l

Verfahrensbeschreibung zur Herstellung starkbasischer monodisperser Anionenaustauscher vom Poly (meth) acrylamid-Typ.
Umsetzung (partielle Quaternierung) des monodispersen, vernetzten, Dimethylaminopropylamidgruppen-haltigen Perlpolymerisates I aus dem erfindungsgemäßen Verfahren mit Chlormethan.
800 ml Harz schwachbasisches aminfrei gewaschenes Harz werden in 880 ml vollentsalztes Wasser eingetragen. Die Suspension wird auf 40°C erhitzt. Innerhalb von 1 Stunde werden 28,05 Gramm Chlormethan dosiert. Dann werden weitere 6 Stunden bei 40°C gerührt.

Nach dem Abkühlen wird das Harz abfiltriert, mit vollentsalztem Wasser gewaschen und ausgelitert.

Ausbeute : 940 ml

Stabilität des Harzes

Originalzustand : 98 % perfekte Perlen
Nach dem Walztest: 96 % perfekte Perlen
Nach dem Quellungsstabilitätstest : 98 % perfekte Perlen

Nutzbare Kapazität des Harzes : 0,94 mol /l
Waschwasser bis 10μS / cm : 4,8 Bettvolumen
Waschwasser bis 2μS / cm : 24,2 Bettvolumen

HCl - Zahl des Harzes : 0,74 mol /l
NaCl - Zahl des Harzes : 0,49 mol /l
NaNO3 - Zahl des Harzes : 0,49 mol /l

Hieraus errechnet sich ein Quaternisierungsgrad von 39,8 % .

**Untersuchungsmethoden:**

**Teilchengrößenverteilung**

Zur Bestimmung der mittleren Teilchengröße und der Teilchengrößenverteilung sind übliche Methoden, wie Siebanalyse oder Bildanalyse geeignet. Als Maß für die Breite der Teilchengrößenverteilung wird das Verhältnis aus dem 90 %-Wert ($\varnothing$ (90)) und dem 10 %-Wert ($\varnothing$ (10)) der Volumenverteilung gebildet. Der 90 %-Wert ($\varnothing$ (90)) gibt den Durchmesser an, der von 90 % der Teilchen unterschritten wird. In entsprechender Weise unterschreiten 10 % der Teilchen den Durchmesser des 10 %-Wertes ($\varnothing$(10)). Teilchengrößenverteilungen von $\varnothing$ (90)/$\varnothing$ (10) $\leq$ 1,5, insbesondere von $\varnothing$ (90)/$\varnothing$ (10) $\leq$ 1,25 sind bevorzugt.

**Bestimmung der Mengen basischer und schwach saurer Gruppen**

In einem 100 ml Messzylinder werden unter voll entsalztem Wasser auf einem Vibriertisch 50 ml Austauscher in der Lieferform eingerüttelt und in ein Filterrohr gespült. 500 ml 2 gew.-%ige Natronlauge werden innerhalb von 50 Minuten hinzudosiert. Anschließend wird mit Tetrahydrofuran in 100 ml Portionen gewaschen. Ab der 2. Portion wird separat im Erlenmeyerkolben das Eluat aufgefangen und gegen Phenolphtalein mit 0,1 normaler Salzsäure von rosa bis farblos titriert. Das Auswaschen endet, wenn der Ablauf mit Phenolphtalein keine Färbung mehr ergibt oder nur 0,1 ml 0,1 normale HCl benötigt werden, um von rosa nach farblos zu titrieren. Dann werden nacheinander 300 ml 1 normale HCl und 300 ml Tetrahydrofuran in jeweils 30 Minuten filtriert. Der Ablauf wird im 1 Liter Messkolben aufgefangen, mit vollentsalztem Wasser bis zur Marke aufgefüllt und gemischt. 10 ml Lösung werden in einem Becherglas mit 50 ml vollentsalztem Wasser verdünnt und unter Verwendung einer pH Elektrode mit 0,1 n Natronlauge bis pH 4,3 titriert. Nach beendeter Titration stellt man mit 0,1 molarer $HNO_3$ den pH-Wert auf ca. 3 ein, verdünnt mit vollentsalztem Wasser auf ca. 100 ml Volumen und titriert mit einer Silber-Elektrode und $AgNO_3$ das Chlorid.

HCl-Zahl : die HCl-Zahl ist ein Maß für die Menge an schwach basischen Gruppen im Harz-Dimension : mol schwach basische Gruppen pro Liter Harz

Bestimmung der HCl-Zahl

$$300 - (AgNO_3 - Verbrauch \cdot 10) / 50 = mol/Liter \ Austauscher \ in \ der \ Lieferform$$

NaOH-Zahl ist ein Maß für die Menge schwach saurer Gruppen im Harz- Dimension : mol schwach saure Gruppen pro Liter Harz

Bestimmung der NaOH-Zahl

$$(\text{AgNO}_3\text{–Verbrauch} \cdot 10) - (\text{NaOH-Verbrauch} \cdot 10) \cdot 0{,}02 \quad = \quad \text{mol/Liter Austauscher in der Lieferform}$$

**Bestimmung der Menge schwach und stark basischer Gruppen**

100 ml Anionenaustauscher werden in einer Glassäule in 1 Stunde und 40 Minuten mit 1000 ml 2 gew.-%iger Natronlauge beaufschlagt. Anschließend wird das Harz mit vollentsalztem Wasser zur Entfernung des Überschusses an Natronlauge gewaschen.

Bestimmung der NaCl-Zahl

50 ml des in der freien Basenform vorliegenden und neutral gewaschenen Austauschers werden in eine Säule gegeben und mit 950 ml 2,5 gew.-%iger wässriger Natriumchloridlösung beaufschlagt. Der Ablauf wird aufgefangen, mit vollentsalztem Wasser auf 1 Liter aufgefüllt und hiervon werden 50 ml mit 0,1 n ( = 0,1 normaler Salzsäure ) titriert. Das Harz wird mit vollentsalztem Wasser gewaschen.

$$\text{Verbrauchte ml } 0{,}1 \text{ n Salzsäure} \cdot 4/100 = \text{NaCl-Zahl in mol} / \text{l Harz.}$$

Bestimmung der $\text{NaNO}_3$-Zahl

Dann werden 950 ml 2,5 gew.-%ige Natriumnitratlösung überfiltriert. Der Ablauf wird mit vollentsalztem Wasser auf 1000 ml aufgefüllt. Hiervon wird ein aliquoter Teil - 10 ml - abgenommen und auf seinen Chloridgehalt durch Titration mit Quecksilbernitratlösung analysiert.

$$\text{Verbrauchte ml Hg ( NO}_3\text{)-Lösung} \cdot \text{Faktor}/17{,}75 = \text{NaNO}_3\text{–Zahl in mol} / \text{Liter Harz.}$$

Bestimmung der HCl-Zahl

Das Harz wird mit vollentsalztem Wasser gewaschen und in ein Becherglas gespült. Es wird mit 100 ml 1 n Salzsäure versetzt und 30 Minuten lang stehen gelassen. Die gesamte Suspension wird in eine Glassäule gespült. Weitere 100 ml Salzsäure werden über das Harz filtriert. Das Harz wird mit Methanol gewaschen. Der Ablauf wird mit vollentsalztem Wasser auf 1000 ml aufgefüllt. Hiervon werden 50 ml mit 1 n Natronlauge titriert.

$$(20 - \text{verbrauchte ml 1 n Natronlauge}) / 5 = \text{HCl-Zahl in mol} / \text{Liter Harz.}$$

Die Menge stark basischer Gruppen ist gleich der Summe aus $\text{NaNO}_3$-Zahl und HCl-Zahl.
Die Menge schwach basischer Gruppen ist gleich der HCl-Zahl.

**Anzahl perfekter Perlen nach Herstellung**

100 Perlen werden unter dem Mikroskop betrachtet. Ermittelt wird die Anzahl der Perlen, die Risse tragen oder Absplitterungen zeigen. Die Anzahl perfekter Perlen ergibt sich aus der Differenz der Anzahl beschädigter Perlen zu 100.

**Bestimmung der Stabilität des Harzes nach dem Walztest**

Das zu prüfende Perlpolymerisat wird in gleichmäßiger Schichtdicke zwischen zwei Kunststofftücher verteilt. Die Tücher werden auf eine feste, waagerecht angebrachte Unterlage gelegt und in einer Walzapparatur 20 Arbeitstakten unterworfen. Ein Arbeitstakt besteht aus einer vor und zurück durchgeführten Walzung. Nach dem Walzen werden an repräsentativen Mustern (100 Perlen) durch Auszählen unter dem Mikroskop die Anzahl der unversehrten Perlen ermittelt.

**Quellungsstabilitätstest**

In eine Säule werden 25 ml Anionenaustauscher in der Chloridform eingefüllt. Nacheinander werden 4 gew.-%ige wässrige Natronlauge, vollentsalztes Wasser, 6 gew.-%ige Salzsäure und nochmals vollentsalztes Wasser in die Säule gegeben, wobei die Natronlauge und die Salzsäure von oben durch das Harz fließen und das vollentsalzte Wasser von unten durch das Harz gepumpt wird. Die Behandlung erfolgt zeitgetaktet über ein Steuergerät. Ein Arbeitszyklus dauert 1h. Es werden 20 Arbeitszyklen durchgeführt. Nach Ende der Arbeitszyklen werden von dem Harzmuster 100 Perlen ausgezählt. Ermittelt wird die Anzahl der perfekten Perlen, die nicht durch Risse oder Absplitterungen geschädigt sind.

**Nutzbare Kapazität von stark basischen und mittelstark basischen Anionenaustauschern und Bestimmung der Waschwassermenge**

1000 ml Anionenaustauscher in der Chloridform, d.h. das Stickstoffatom trägt als Gegenion Chlorid, werden in eine Glassäule gefüllt. 2500 ml 4 gew.-%ige Natronlauge werden über das Harz in 1 Stunde filtriert. Anschließend wird mit 2 Litern entbastem d.h. entkationisiertem Wasser gewaschen. Die Menge Waschwasser, die benötigt wird bis das Eluat eine Leitfähigkeit von 10 $\mu$S/ cm bzw. 2 $\mu$S/ cm zeigt, wird in Bettvolumen pro Liter Harz angegeben Dann wird über das Harz mit einer Geschwindigkeit von 10 Litern pro Stunde Wasser mit einer Gesamtanionenhärte von 25 Grad deutscher Härte filtriert. Im Eluat werden die Härte sowie die Restmenge an Kieselsäure analysiert. Bei einem Rest-Kieselsäuregehalt von $\geq$ 0,1 mg/l ist die Beladung beendet.

Aus der Menge Wasser, die über das Harz filtriert wird, der Gesamtanionenhärte des überfiltrierten Wassers sowie der Menge eingebauten Harzes wird ermittelt wie viel Gramm CaO pro Liter Harz aufgenommen werden. Die Grammmenge an CaO stellt die nutzbare Kapazität des Harzes in der Einheit Gramm CaO pro Liter Anionenaustauscher dar.

**Patentansprüche**

1. Verfahren zur Herstellung monodisperser schwachbasischer Anionenaustauscher vom Poly(meth)acrylamid-Typ, **dadurch gekennzeichnet, dass** man

   a) in einer ersten Stufe eine Monomermischung enthaltend eine oder mehrere verschiedene Acrylverbindungen und einen oder mehrere Vernetzer oder eine oder mehrere monovinylaromatischen Verbindungen und einen oder mehrere Vernetzer in eine mit der Monomermischung im wesentlichen nicht mischbaren Flüssigkeit eindüst oder einsprüht, dann verkapselt und polymerisiert und nach der Verkapselung mit einem Feed aus Acrylverbindungen und Vernetzer nach einem Saat-Zulauf Verfahren umsetzt und polymerisiert und

   b) das aus der ersten Stufe erhaltene Produkt in flüssige Amine vom Diamintyp einträgt, die Suspension auf Temperaturen größer 100°C erhitzt und gegebenenfalls unter Abdestillation entstehender Komponenten mehrere Stunden lang rührt, sowie das erhaltene aminierte Perlpolymerisat aminfrei wäscht.

2. Verfahren zur Herstellung monodisperser schwachbasischer Anionenaustauscher vom Poly(meth)acrylamid-Typ, gemäß Anspruch 1, **dadurch gekennzeichnet, dass** man

   a) in einer ersten Stufe eine Mischung aus einen oder mehreren verschiedenen Acrylverbindungen und einen oder mehrerer verschiedener Vernetzer in eine mit der Monomermischung im Wesentlichen nicht mischbaren Flüssigkeit eindüst oder einsprüht, dann verkapselt und polymerisiert und das aus der ersten Stufe erhaltene Produkt gemäß der Stufe b) weiter umsetzt.

3. Verfahren gemäß Anspruch 1 oder 2, **dadurch gekennzeichnet, dass** das monodisperse perlförmige vernetzte Acrylpolymerisat in Verfahrensschritt a) durch eine Kombination von Verdüsung (Jetting) und Polymerisation erzeugt wird.

4.   Verfahren gemäß Anspruch 1 oder 2, **dadurch gekennzeichnet, dass** der Feed dynamisch oder statisch im Verfahrensschritt a) zugegeben wird.

5.   Verfahren gemäß der Ansprüche 1 bis 3, **dadurch gekennzeichnet, dass** die Monomertröpfchen mit einem Komplexkoazervat mikroverkapselt werden.

6.   Verfahren gemäß Anspruch 5, **dadurch gekennzeichnet, dass** dieses in Gegenwart eines Schutzkolloids durchgeführt wird.

7.   Verfahren gemäß der Ansprüche 1 bis 6, **dadurch gekennzeichnet, dass** dieses in Gegenwart mindestens eines Initiators durchgeführt wird.

8.   Verfahren gemäß der Ansprüche 1 bis 7, **dadurch gekennzeichnet, dass** die Monomertröpfchen Porogene enthalten und nach der Polymerisation makroporöse, vernetzte Perlpolymerisate bilden.

9.   Verfahren gemäß der Ansprüche 1 bis 8, **dadurch gekennzeichnet, dass** währenddessen ein Polymerisationsinhibitor eingesetzt wird.

10.  Verfahren gemäß Anspruch 6, **dadurch gekennzeichnet, dass** als Schutzkolloide Gelatine, Stärke, Polyvinylalkohol, Polyvinylpyrrolidon, Polyacrylsäure, Polymethacrylsäure oder Copolymerisate aus (Meth)acrylsäure oder (Meth)acrylsäureester eingesetzt werden.

11.  Verfahren gemäß Anspruch 1, **dadurch gekennzeichnet, dass** als monovinylaromatische Verbindungen monoethylenisch ungesättigte Verbindungen eingesetzt werden für den Fall dass im Verfahrensschritt a) von monodispersen Styrol-Divinylbenzol-Perlpolymerisaten ausgegangen wird.

12.  Verfahren gemäß der Ansprüche 1 und 2, **dadurch gekennzeichnet, dass** als Vernetzer, Divinylbenzol, Divinyltoluol, Trivinylbenzol, Divinylnaphthalin, Trivinylnaphthalin, 1,7-Octadien, 1,5-Hexadien, Ethylenglycoldimethacrylat, Trimethylolpropantrimethacrylat, Allylmethacrylat oder Diethylenglykoldivinylether eingesetzt werden.

13.  Verfahren gemäß Anspruch 7, **dadurch gekennzeichnet, dass** als Initiator Peroxyverbindungen wie Dibenzoylperoxid, Dilauroylperoxid, Bis-(p-chlorbenzoyl)peroxid, Dicyclohexylperoxydicarbonat, tert.-Butylperoctoat, tert.-Butyl-peroxy-2-ethyl-hexanoat, 2,5-Bis-(2-ethylhexanoylperoxy)-2,5-dimethylhexan oder tert.-Amylperoxy-2-ethylhexan sowie Azoverbindungen wie 2,2'-Azobis(isobutyronitril) oder 2,2'-Azobis-(2-methylisobutyronitril) eingesetzt werden.

14.  Verfahren gemäß der Ansprüche 1 oder 2, **dadurch gekennzeichnet, dass** als Amine 1-Amin-3-dimethylaminopropan, Diethylentriamin, Triethylentetramin eingesetzt werden.

15.  Verfahren zur Herstellung stark basischer monodisperser Anionenaustauscher mit quartären Aminogruppen von Poly(meth)acrylamid-Typ, **dadurch gekennzeichnet, dass** das aminierte Perlpolymerisat aus Verfahrensschritt b) gemäß Anspruch 1 oder 2 mit Alkyl oder Arylhalogeniden, bevorzugt Chlormethan oder Benzylchlorid oder einem Gemisch aus Chlormethan und Benzylchlorid umgesetzt wird.

16.  Schwachbasische monodisperse Anionenaustauscher vom Poly(meth)acrylamid-Typ erhältlich durch

a) Eindüsen oder Einsprühen einer Monomermischung enthaltend eine oder mehrere verschiedene Acrylverbindungen und einen oder mehrere Vernetzer oder eine oder mehrere monovinylaromatische Verbindungen und eine oder mehrere Vernetzer in eine mit der Monomermischung im wesentlichen nicht mischbaren Flüssigkeit mit anschließender Verkapselung und Polymerisation und Umsetzen der Monomermischung nach der Verkapselung mit einem Feed aus Acrylverbindungen und Vernetzern nach einem Saat-Zulauf-Verfahren und
b) Eintragen des aus der ersten Stufe erhaltenen Produkts in flüssige Amine vom Diamintyp, Erhitzen der Suspension auf Temperaturen größer 100°C und Rühren über mehrere Stunden lang, sowie Waschen des aminierten Perlpolymerisats bis dieses aminfrei vorliegt.

17.  Schwachbasische monodisperse Anionenaustauscher gemäß Anspruch 16 vom Poly(meth)acrylamid-Typ erhältlich durch

a) Eindüsen oder Einsprühen einer Monomermischung enthaltend eine oder mehrere verschiedene Acrylverbindungen und einen oder mehrere Vernetzer in eine mit der Monomermischung im Wesentlichen nicht mischbaren Flüssigkeit mit anschließender Verkapselung und Polymerisation und Umsetzen des aus der ersten Stufe erhaltenen Produkts gemäß Stufe b) des Anspruch 16.

18. Schwachbasische monodiserse Anionenaustauscher vom Poly(meth)acrylamid-Typ gemäß Anspruch 16, **dadurch gekennzeichnet, dass** eine Monomermischung aus Styrol und Divinylbenzol mit einem Feed aus Acrylverbindungen und Vernetzer umgesetzt wird.

19. Starkbasische monodisperse Anionenaustauscher vom Poly(meth)acrylamid-Typ erhältlich durch Umsetzen des aminierten Perlpolymerisats aus Verfahrensschritt b) gemäß der Ansprüche 16, 17 oder 18 mit Alkylhalogeniden oder Arylhalogeniden teilweise oder vollständig zu stark basischen monodispersen Anionenaustauschern mit quartären Aminogruppen vom Poly(meth)acrylat-Typ.

20. Verwendung der monodispersen schwachbasischen und starkbasischen Anionenaustauscher vom Poly(meth)acrylamid-Typ gemäß der Ansprüche 16 bis 19 zur Entfernung von Anionen, Farbpartikeln oder organischen Komponenten aus wässrigen oder organischen Lösungen oder Kondensaten, zur Reinigung und Aufarbeitung von Wässern der chemischen Industrie und der Elektronik-Industrie, und in Kombination mit gelförmigen und/oder makroporösen Kationenaustauschern zur Vollentsalzung wässriger Lösungen und/oder Kondensate.

21. Kombinationen von monodispersen starkbasischen oder schwachbasischen Anionenaustauschern vom Poly(meth)acrylamid-Typ gemäß der Ansprüche 16 bis 19 mit gelförmigen und/oder makroporösen Kationenaustauschern zur Vollentsalzung wässriger Lösungen und/oder Kondensate.

**Claims**

1. Process for producing monodisperse weakly basic anion exchangers of the poly(meth)acrylamide type, **characterized in that**

   a) in a first stage a monomer mixture comprising one or more different acrylic compounds and one or more crosslinkers or one or more monovinylaromatic compounds and one or more crosslinkers is injected or sprayed into a liquid essentially immiscible with the monomer mixture, then encapsulated and polymerized, and following encapsulation reacted with a feed of acrylic compounds and crosslinkers in accordance with a seed-feed process and polymerized and
   b) the product obtained from the first stage is introduced into liquid amines of the diamine type, the suspension is heated to temperatures above 100°C, and, optionally distilling off resultant components, is stirred for several hours, and the aminated bead polymer obtained is washed amine-free.

2. Process for producing monodisperse weakly basic anion exchangers of the poly(meth)acrylamide type according to Claim 1, **characterized in that**

   a) in a first stage a mixture of one or more different acrylic compounds and one or more different crosslinkers is injected or sprayed into a liquid essentially immiscible with the monomer mixture, then encapsulated and polymerized, and the product obtained from the first stage is reacted further according to stage b).

3. Process according to Claim 1 or 2, **characterized in that** the monodisperse bead-type crosslinked acrylic polymer in process step a) is produced by a combination of spraying (jetting) and polymerization.

4. Process according to Claim 1 or 2, **characterized in that** the feed is added dynamically or statically in process step a).

5. Process according to Claims 1 to 3, **characterized in that** the monomer droplets are microencapsulated with a complex coacervate.

6. Process according to Claim 5, **characterized in that** this is carried out in the presence of a protecting colloid.

7. Process according to Claims 1 to 6, **characterized in that** this is carried out in the presence of at least one initiator.

8. Process according to one of Claims 1 to 7, **characterized in that** the monomer droplets contain porogens and, after the polymerization, form macroporous crosslinked bead polymers.

9. Process according to one of Claims 1 to 8, **characterized in that**, during which, a polymerization inhibitor is used.

10. Process according to Claim 6, **characterized in that** the protecting colloid is gelatine, starch, polyvinylalcohol, polyvinylpyrrolidone, polyacrylic acid, polymethacrylic acid or copolymers of (meth)acrylic acid or (meth)acrylic esters.

11. Process according to Claim 1, **characterized in that** the monovinylaromatic compounds are monoethylenically unsaturated compounds in the event that, in process step a), the process proceeds from monodisperse styrenedivinylbenzene bead polymers.

12. Process according to Claims 1 and 2, **characterized in that** the crosslinker is divinylbenzene, divinyltoluene, trivinylbenzene, divinylnaphthalene, trivinylnaphthalene, 1,7-octadiene, 1,5-hexadiene, ethylene glycol dimethacrylate, trimethylolpropane trimethacrylate, allyl methacrylate or diethylene glycol divinyl ether.

13. Process according to Claim 7, **characterized in that** the initiator is a peroxy compound such as dibenzoyl peroxide, dilauroyl peroxide, bis(p-chlorobenzoyl) peroxide, dicyclohexyl peroxydicarbonate, tert-butyl peroctoate, tert-butyl peroxy-2-ethylhexanoate, 2,5-bis(2-ethyl-hexanoylperoxy)-2,5-dimethylhexane or tert-amylperoxy-2-ethylhexane, or azo compounds such as 2,2'-azobis(isobutyronitrile) or 2,2'-azobis(2-methylisobutyronitrile).

14. Process according to Claim 1 or 2, **characterized in that** the amine is 1-amino-3-dimethylaminopropane, diethylenetriamine, triethylenetetramine.

15. Process for preparing strongly basic monodisperse anion exchangers of the poly(meth)acrylamide type containing quaternary amino groups, **characterized in that** the aminated bead polymer from process step b) is reacted according to Claim 1 or 2 with alkyl or aryl halides, preferably chloromethane or benzyl chloride or a mixture of chloromethane and benzyl chloride.

16. Weakly basic monodisperse anion exchangers of the poly(meth)acrylamide type obtainable by

> a) injecting or spraying a monomer mixture comprising one or more different acrylic compounds and one or more crosslinkers or one or more monovinylaromatic compounds and one or more crosslinkers in a liquid which is essentially immiscible with the monomer mixture with subsequent encapsulation and polymerization and reaction of the monomer mixture following encapsulation with a feed of acrylic compounds and crosslinkers according to a seed-feed process and
> b) introducing the product obtained from the first stage into liquid amines of the diamine type, heating the suspension to temperatures above 100°C and stirring for a plurality of hours, and washing the aminated bead polymer until it is amine-free.

17. Weakly basic monodisperse anion exchangers according to Claim 16 of the poly(meth)acrylamide type obtainable by

> a) spraying or injecting a monomer mixture comprising one or more different acrylic compounds and one or more crosslinkers into a liquid which is essentially immiscible with the monomer mixture with subsequent encapsulation and polymerization and reaction of the product obtained from the first stage according to stage b) of Claim 16.

18. Weakly basic monodisperse anion exchangers of the poly(meth)acrylamide type according to Claim 16, **characterized in that** a monomer mixture of styrene and divinylbenzene is reacted with a feed of acrylic compounds and crosslinker.

19. Strongly basic monodisperse anion exchangers of the poly(meth)acrylamide type obtainable by reacting the aminated bead polymer from process step b) according to Claims 16, 17 or 18 partially or completely with alkyl halides or aryl halides to give strongly basic monodisperse anion exchangers of the poly(meth)acrylate type containing quaternary amino groups.

20. Use of the monodisperse weakly basic and strongly basic anion exchangers of the poly(meth)acrylamide type according to Claims 16 to 19 for removing anions, colour particles or organic components from aqueous or organic solutions or condensates, for purifying and treating waters of the chemical industry and the electronics industry, and in combination with gel-type and/or macroporous cation exchangers for demineralizing aqueous solutions and/or condensates.

**21.** Combinations of monodisperse strongly basic or weakly basic anion exchangers of the poly(meth)acrylamide type according to Claims 16 to 19 together with gel-type and/or macroporous cation exchangers for demineralizing aqueous solutions and/or condensates.

**Revendications**

**1.** Procédé de fabrication d'échangeurs d'anions faiblement basiques monodispersés, du type poly(méth)acrylamide, **caractérisé en ce que** :

a) dans une première étape, on injecte ou on pulvérise un mélange de monomères contenant un ou plusieurs composés acryliques différents et un ou plusieurs agents de réticulation, ou un ou plusieurs composés monovinylaromatiques et un ou plusieurs agents de réticulation, dans un liquide sensiblement non miscible au mélange de monomères, on effectue ensuite l'encapsulation et la polymérisation et, après l'encapsulation, on fait réagir et polymériser le tout avec une alimentation constituée de composés acryliques et d'agents de réticulation selon un procédé d'alimentation d'agent de germination, et
b) on introduit le produit obtenu à la première étape dans des amines liquides du type diamine, on fait chauffer la suspension à des températures supérieures à 100 °C et, éventuellement, on agite le tout pendant plusieurs heures tout en séparant par distillation les composants qui se forment, et on lave le polymère aminé sous forme de perles obtenu, jusqu'à ce qu'il soit exempt d'amines.

**2.** Procédé de fabrication d'échangeurs d'anions faiblement basiques monodispersés du type poly(méth)acrylamide selon la revendication 1, **caractérisé en ce que** :

a) dans une première étape, on injecte ou on pulvérise un mélange composé d'un ou de plusieurs composés acryliques différents et d'un ou de plusieurs agents de réticulation dans un liquide sensiblement non miscible au mélange de monomères, on effectue ensuite l'encapsulation et la polymérisation et on fait réagir le produit obtenu à la première étape selon l'étape b).

**3.** Procédé selon l'une quelconque des revendications 1 ou 2, **caractérisé en ce que** le polymère acrylique réticulé monodispersé sous forme de perle est produit à l'étape a) du procédé par une combinaison d'injection (Jetting) et de polymérisation.

**4.** Procédé selon l'une quelconque des revendications 1 ou 2, **caractérisé en ce que** l'on ajoute l'alimentation de manière dynamique ou statique à l'étape a) du procédé.

**5.** Procédé selon les revendications 1 à 3, **caractérisé en ce que** les gouttelettes de monomères sont microencapsulées avec un coacervat complexe.

**6.** Procédé selon la revendication 5, **caractérisé en ce que** celui-ci est réalisé en présence d'un colloïde protecteur.

**7.** Procédé selon les revendications 1 à 6, **caractérisé en ce que** celui-ci est réalisé en présence d'au moins un initiateur.

**8.** Procédé selon les revendications 1 à 7, **caractérisé en ce que** les gouttelettes de monomères contiennent des porogènes et forment, après la polymérisation, des polymères réticulés macroporeux sous forme de perles.

**9.** Procédé selon les revendications 1 à 8, **caractérisé en ce que** l'on utilise, dans le même temps, un inhibiteur de polymérisation.

**10.** Procédé selon la revendication 6, **caractérisé en ce que** l'on utilise, comme colloïdes protecteurs, la gélatine, l'amidon, l'alcool polyvinylique, la polyvinylpyrrolidone, l'acide polyacrylique, l'acide poly(méth)acrylique ou des copolymères d'acide (méth)acrylique ou d'esters d'acide (méth)acrylique.

**11.** Procédé selon la revendication 1, **caractérisé en ce que** l'on utilise, comme composés monovinylaromatiques, des composés à insaturation monoéthylénique au cas où il ya a, à l'étape a) du procédé, des polymères de styrène-divinylbenzène monodispersés sous forme de perles.

**12.** Procédé selon l'une quelconque des revendications 1 et 2, **caractérisé en ce que** l'on utilise, comme agents de réticulation, le divinyl-benzène, le divinyltoluène, le trivinylbenzène, le divinylnaphtalène, le trivinylnaphtalène, le 1,7-octadiène, le 1,5-hexadiène, le diméthacrylate d'éthylèneglycol, le triméthacrylate de triméthylolpropane, le méthacrylate d'allyle ou le divinyléther de diéthylèneglycol.

**13.** Procédé selon la revendication 7, **caractérisé en ce que** l'on utilise, comme initiateur, des composés de peroxyde, tels que le peroxyde de dibenzoyle, le peroxyde de dilauroyle, le peroxyde de bis-(p-chlorobenzoyle), le peroxydicarbonate de dicyclohexyle, le peroctoate de tert-butyle, le peroxy-2-éthyl-hexanoate de tert-butyle, le 2,5-bis-(2-éthylhexanoylperoxy)-2,5-diméthylhexane ou le tert-amylperoxy-2-éthylhexane, ainsi que des composés azoïques, tels que le 2,2'-azo-bis (isobutyronitrile) ou le 2,2'-azobis-(2-méthyl-isobutyronitrile).

**14.** Procédé selon l'une quelconque des revendications 1 ou 2, **caractérisé en ce que** l'on utilise, comme amines, le 1-amino-3-diméthylaminopropane, la diéthylènetriamine ou la triéthylènetétramine.

**15.** Procédé de fabrication d'échangeurs d'anions fortement basiques monodispersés ayant des groupements amino quaternaires, du type poly(méth)acrylamide, **caractérisé en ce que** l'on fait réagir le polymère aminé sous forme de perles obtenu à l'étape b) du procédé, selon l'une quelconque des revendications 1 ou 2 avec des halogénures d'alkyle ou d'aryle, de préférence, le chlorométhane ou le chlorure de benzyle, ou avec un mélange de chlorométhane et de chlorure de benzyle.

**16.** Echangeurs d'anions faiblement basiques monodispersés du type poly(méth)acrylamide, que l'on peut obtenir :

a) par injection ou pulvérisation d'un mélange de monomères contenant un ou plusieurs composés acryliques différents et un ou plusieurs agents de réticulation, ou un ou plusieurs composés monovinylaromatiques et un ou plusieurs agents de réticulation, dans un liquide sensiblement non miscible au mélange de monomères, puis par encapsulation, polymérisation et réaction du mélange de monomères, après encapsulation, avec une alimentation constituée de composés acryliques et d'agents de réticulation selon un procédé d'alimentation d'agents de germination, et

b) par introduction du produit obtenu à la première étape dans des amines liquides de type diamine, chauffage de la suspension à des températures supérieures à 100 °C et agitation sur plusieurs heures, ainsi que par lavage du polymère aminé sous forme de perles, jusqu'à ce qu'il soit exempt d'amines.

**17.** Echangeurs d'anions faiblement basiques monodispersés selon la revendication 16 du type poly(méth)acrylamide, que l'on peut obtenir :

a) par injection ou pulvérisation d'un mélange de monomères contenant un ou plusieurs composés acryliques différents et un ou plusieurs agents de réticulation dans un liquide sensiblement non miscible au mélange de monomères, puis par encapsulation, polymérisation, et réaction du produit obtenu à la première étape selon l'étape b) de la revendication 16.

**18.** Echangeurs d'anions faiblement basiques monodispersés du type poly(méth)acrylamide selon la revendication 16, **caractérisés en ce que** l'on fait réagir un mélange de monomères de styrène et de divinylbenzène avec une alimentation constituée de composés acryliques et d'agents de réticulation.

**19.** Echangeurs d'anions fortement basiques monodispersés du type poly(méth)acrylamide, que l'on peut obtenir en faisant réagir le polymère aminé sous forme de perles de l'étape b) du procédé selon les revendications 16, 17 ou 18, avec des halogénures d'alkyle ou des halogénures d'aryle pour obtenir partiellement ou totalement des échangeurs d'anions fortement basiques monodispersés ayant des groupements amino quaternaires, du type poly(méth) acrylate.

**20.** Utilisation des échangeurs d'anions faiblement et fortement basiques monodispersés du type poly(méth)acrylamide selon les revendications 16 à 19, pour éliminer les anions, les particules de couleur ou les composants organiques de solutions ou de condensats aqueux ou organiques, pour épurer et traiter les eaux utilisées en industrie chimique et en industrie électronique et, en combinaison avec des échangeurs cationiques sous forme de gel et/ou macroporeux, pour déminéraliser complètement des solutions et/ou des condensats aqueux.

**21.** Combinaisons d'échangeurs d'anions fortement ou faiblement basiques monodispersés du type poly(méth)acrylamide selon les revendications 16 à 19 avec des échangeurs cationiques sous forme de gel et/ou macroporeux, pour déminéraliser complètement des solutions et/ou des condensats aqueux.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0464458 A
- EP 0532894 A
- EP 0046535 A
- EP 1078688 A
- US 4082701 A
- US 2675359 A
- CZ 169356 A
- DD 99587
- US 5414020 A
- US 5068255 A

- US 5834524 A
- US 4444961 A
- US 4427794 A
- US 4419245 A
- US 5231115 A
- US 4564644 A
- DE 1045102
- DE 1113570
- US 4382124 A

**In der Beschreibung aufgeführte Nicht-Patentliteratur**

- **SEIDL et al.** *Chemicky prumysl, roc.,* 1979, vol. 29, 54

- **SEIDL ; MALINSKY ; DUSEK ; HEITZ.** *Polymer Sci.,* 1967, vol. 5, 113-213